# FASCICULE DE BREVET EUROPEEN

(11) **EP 2 947 577 B1**
(45) Date de publication et mention de la délivrance du brevet: **08.11.2023**
(21) Numéro de dépôt: 15167601.2
(22) Date de dépôt: 13.05.2015
(51) Int. Cl.: G06F 15/173, G06F 9/52

(54) **SYSTÈME DE SYNCHRONISATION INTER-PROCESSEURS**
SYNCHRONISATIONSSYSTEM ZWISCHEN PROZESSOREN
INTER-PROCESSOR SYNCHRONIZATION SYSTEM

(30) Priorité: 21.05.2014 FR 1454591
(43) Date de publication de la demande: 25.11.2015
(73) Titulaire: Kalray, 91400 Orsay (FR)
(72) Inventeur: Dupont de Dinechin, Benoît, 38000 Grenoble (FR); Ray, Vincent, 91400 Orsay (FR)
(74) Mandataire: de Jong, Jean Jacques

(56) Documents cités:
- P Gerin: "Modèles de simulation pour la validation logicielle et l'exploration d'architectures des systèmes multiprocesseurs sur puce", Thèse, 30 novembre 2009 (2009-11-30), pages 1-142, XP055181728, DOI: 10.1109/13.214713 Extrait de l'Internet: URL:http://ieeexplore.ieee.org/xpls/abs_al l.jsp?arnumber=214713 [extrait le 2015-04-08]
- CRISTIANO ARAUJO ET AL: "Platform designer: An approach for modeling multiprocessor platforms based on SystemC", DESIGN AUTOMATION FOR EMBEDDED SYSTEMS ; AN INTERNATIONAL JOURNAL, KLUWER ACADEMIC PUBLISHERS, BO, vol. 10, no. 4, 1 décembre 2005 (2005-12-01), pages 253-283, XP019464684, ISSN: 1572-8080, DOI: 10.1007/S10617-006-0654-9
- C Koch-Hofer: "Modélisation, Validation et Présynthèse de Circuits Asynchrones en SystemC", HAL Id: tel-00388418, 26 mars 2009 (2009-03-26), pages 1-155, XP055181680, Extrait de l'Internet: URL:http://hal.univ-grenoble-alpes.fr/tel- 00388418/document [extrait le 2015-04-08]

## Description

### Domaine technique

L'invention est relative à la synchronisation de plusieurs processeurs exécutant en parallèle des fils d'un même programme partageant une même ressource, et plus spécifiquement à un système de communication permettant à des processeurs d'écrire directement des données dans les registres de travail de processeurs voisins.

### Arrière-plan

L'article [Rajiv Gupta, "Employing Register Channels for the Exploitation of Instruction Level Parallelism", PPOPP '90 Proceedings of the Second ACM SIGPLAN Symposium on Principles & Practice of Parallel Programming, Pages 118-127] décrit un système de communication inter-processeurs utilisant des « canaux de registres ». Un « canal de registre » identifie un canal de communication permettant à un processeur source d'écrire des données dans un registre désigné d'un processeur cible par une liaison point-à-point entre les processeurs source et cible. Le registre en question fait partie des registres de travail, ou banc de registres, du processeur cible, de sorte que les données écrites dans le registre sont accessibles par le processeur sans latence, en un seul cycle d'horloge.

Un drapeau de synchronisation est ajouté à chaque registre pouvant servir à un canal. Un jeu d'instructions spécifique est prévu pour effectuer des opérations sur les canaux, combinant des accès au registre à distance et localement et la gestion du drapeau de synchronisation.

Dans un canal établi entre un processeur source et un registre d'un processeur cible, le drapeau du canal est initialement à 0, indiquant que le registre n'est pas à jour. Le drapeau est mis à 1 lorsque le processeur source écrit une donnée dans le canal. Pour exploiter le contenu du registre, le processeur cible exécute une instruction de lecture du registre, qui remet le drapeau à 0.

Si l'instruction de lecture exécutée par le processeur cible rencontre un drapeau à 0, le processeur cible s'arrête en attendant que le drapeau passe à 1. Si l'instruction d'écriture exécutée par le processeur source rencontre un drapeau à 1, le processeur source s'arrête en attendant que le drapeau passe à 0.

Avec ce système, le processeur source doit connaître l'état du drapeau du canal avant d'écrire dans le canal. Cela implique l'exécution au préalable dans le processeur source d'une lecture à distance par le canal pour connaître l'état du drapeau, ou bien de prévoir un fil transmettant l'état du drapeau dans la liaison point-à-point entre les processeurs. En pratique, un seul registre par processeur est attribué à un canal dans un tel système.

Le fait que le drapeau d'un canal soit basculé ou sondé par des instructions servant également à manipuler les données peut priver le programmeur d'une certaine souplesse lui permettant de faire des optimisations, notamment dans le cadre de processeurs d'architecture VLIW.

De l'art antérieur on connaît aussi les documents de P. Gérin, "Modèles de simulation pour la validation logicielle et l'exploration d'architectures des systèmes multiprocesseurs sur puce", 30 novembre 2009, et de C. ARAUJO , "Platform designer: An approach for modeling multiprocessor platforms based on SystemC", décembre 2005, et de C. Koch-Hofer, "Modélisation, Validation et Présynthèse de Circuits Asynchrones en SystemC", 26 mars 2009. Ces trois documents proposent, dans un environnement de simulation, des procédés de synchronisation entre processus producteurs et processus consommateurs basés sur des commandes d'attente et de notification.

### Résumé

On prévoit de façon générale un procédé de synchronisation inter-processeurs par des liaisons point-à-point, comprenant les étapes consistant à définir un canal de synchronisation point-à-point entre un processeur source et un processeur cible ; exécuter dans le processeur source une commande d'attente d'une notification associée au canal de synchronisation, la commande d'attente étant conçue pour provoquer l'arrêt du processeur source jusqu'à la réception de la notification ; exécuter dans le processeur cible une commande de notification conçue pour émettre par la liaison point-à-point la notification attendue par le processeur source ; exécuter dans le processeur cible une commande d'attente d'une notification associée au canal de synchronisation, conçue pour provoquer l'arrêt du processeur cible jusqu'à la réception de la notification ; et exécuter dans le processeur source une commande de notification conçue pour émettre par la liaison point-à-point la notification attendue par le processeur cible.

Le procédé peut comprendre en outre les étapes consistant, dans le processeur cible, au plus tard en même temps que l'exécution de la commande de notification, à exécuter une instruction libérant une ressource partagée ; et dans le processeur source, au plus tard en même temps que l'exécution de la commande de notification, à exécuter une instruction d'écriture dans la ressource partagée.

La ressource partagée peut être un registre de travail du processeur cible et l'instruction d'écriture être conçue pour mettre à jour le registre par la liaison point-à-point.

Le procédé comprend en outre les étapes consistant à prévoir une instruction de synchronisation dédiée dans le jeu d'instructions des processeurs, conçue pour exécuter en parallèle une commande d'attente et une commande de notification identifiables par un paramètre de l'instruction de synchronisation ; dans le processeur source, à paramétrer la commande d'attente et la commande de notification dans une première instruction de synchronisation ; et à exécuter dans le processeur source la première instruction de synchronisation, d'où il résulte que :
- la commande d'attente prédomine et suspend l'exécution de la commande de notification jusqu'à la réception de la notification du processeur cible,
- la commande de notification est exécutée à la réception de la notification du processeur cible,
- si la notification du processeur cible est reçue au plus tard à l'exécution de la première instruction de synchronisation, les commandes d'attente et de notification sont exécutées en parallèle.

Les processeurs peuvent être d'architecture VLIW permettant l'exécution en parallèle de plusieurs instructions contenues dans un même paquet VLIW, le procédé comprenant les étapes consistant, dans le processeur cible, au plus tard en même temps que l'exécution de la commande de notification, à exécuter une instruction libérant une ressource partagée ; et à exécuter dans le processeur source, dans le même paquet VLIW, la première instruction de synchronisation et une instruction d'écriture dans la ressource partagée, d'où il résulte que la commande de notification et l'instruction d'écriture sont exécutées en parallèle à la réception de la notification du processeur cible.

Le procédé peut comprendre en outre les étapes suivantes mises en oeuvre dans le processeur cible :
- paramétrer la commande d'attente dans une deuxième instruction de synchronisation ;
- paramétrer la commande de notification dans une troisième instruction de synchronisation ; et
- exécuter la troisième instruction de synchronisation et l'instruction libérant la ressource partagée dans le même paquet VLIW.

Le procédé peut comprendre en outre l'étape consistant à concevoir l'instruction de synchronisation dédiée pour pouvoir exécuter en parallèle un nombre choisi de commandes d'attente et un nombre choisi de commandes de notification, identifiables par le paramètre de l'instruction.

Le procédé peut comprendre en outre les étapes consistant à identifier le canal de synchronisation par un identifiant unique ; et utiliser l'identifiant unique comme paramètre des commandes d'attente et de notification relatives au canal de synchronisation.

Le procédé peut comprendre en outre les étapes consistant, à l'exécution d'une commande de notification dans un processeur local à destination d'un processeur distant, à présenter l'identifiant unique sur la liaison point-à-point entre les processeurs local et distant ; dans le processeur distant, à écrire l'identifiant unique dans un registre d'événement ; et à l'exécution de la commande d'attente dans le processeur distant :
- comparer le contenu du registre d'événement au paramètre de la commande d'attente ; et
- en cas d'égalité, terminer l'attente et réinitialiser le contenu du registre d'événement.

Le procédé peut comprendre en outre les étapes consistant à identifier chaque canal de synchronisation distinct en activant un bit de poids respectif d'un identifiant de format commun aux registres d'événement de tous les processeurs ; écrire dans le registre d'événement du processeur distant tous les bits actifs des identifiants présentés sur toutes les liaisons point-à-point arrivant au processeur distant ; et à l'exécution de la commande d'attente dans le processeur distant, terminer l'attente si tous les bits actifs du paramètre de la commande d'attente sont actifs dans le registre d'événement, d'où il résulte qu'une commande d'attente peut être paramétrée pour attendre des notifications de plusieurs processeurs à la fois.

### Description sommaire des dessins

Des modes de réalisation seront exposés dans la description suivante, faite à titre non limitatif en relation avec les figures jointes parmi lesquelles :
- la figure 1 est un schéma-bloc d'une matrice de processeurs divisée en plusieurs groupes dans lesquels des processeurs peuvent communiquer par des liaisons point à point ;
- la figure 2 représente un exemple de séquencement de synchronisation entre processeurs selon un protocole utilisant des notifications ;
- la figure 3 représente un autre exemple de séquencement de synchronisation dans le même contexte qu'à la figure 2 ;
- la figure 4 représente le séquencement de synchronisation de la figure 3 en utilisant des instructions de synchronisation de groupe ; et
- la figure 5 est un schéma bloc illustrant des liaisons point-à-point entre processeurs destinées à véhiculer des notifications.

### Description de modes de réalisation

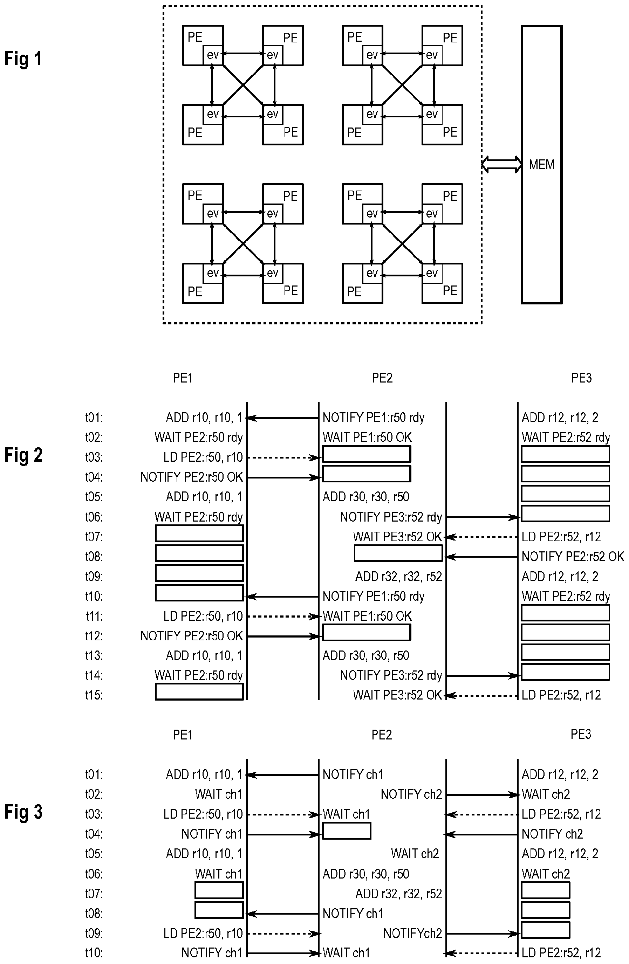

La figure 1 représente un exemple de matrice de 4x4 processeurs PE. Les processeurs PE peuvent être reliés à un bus commun également relié à une mémoire partagée MEM. La mémoire MEM peut contenir le code des programmes exécutés par les processeurs et les données de travail des programmes.

Comme évoqué plus haut, chaque processeur dispose généralement d'un banc de registres qui lui est dédié, servant à manipuler les opérandes utilisables par le jeu d'instructions du processeur. Afin de mettre en oeuvre une technique de communication inter-processeurs employant des canaux de registres, les processeurs peuvent être groupés par quatre processeurs voisins, comme cela est représenté. Chaque processeur d'un groupe est relié aux trois autres processeurs du groupe par des liaisons point-à-point. Le nombre de processeurs dans un groupe est borné en pratique par le nombre de liaisons point-à-point que l'on peut câbler entre les processeurs dans la surface disponible de la matrice.

Les liaisons point-à-point, associées à des interfaces EV des processeurs, sont conçues pour permettre à chaque processeur d'écrire directement une donnée dans un registre désigné d'un autre processeur quelconque du groupe. Grâce aux techniques de synchronisation décrites ci-après, aucune contrainte particulière n'est imposée au registre désigné. Le registre peut être dédié ou choisi arbitrairement dans le banc de registres du processeur cible. Par processeur « cible » on entend un processeur qui reçoit dans un des ses registres une donnée écrite par un processeur « source » au moyen de la liaison point-à-point reliant les deux processeurs. Le processeur cible et le registre désigné définissent un « canal de registre ».

On propose ci-après une technique particulière de synchronisation entre processeurs permettant d'exploiter des ressources partagées, notamment des canaux de registres. Cette technique utilise des commandes dédiées pouvant être intégrées au jeu d'instructions des processeurs. Les commandes comprennent notamment une commande de notification (NOTIFY), une commande d'attente de notification (WAIT), et une commande d'écriture distante d'une donnée.

De telles commandes permettent d'effectuer une synchronisation inter-processeurs de manière logicielle et flexible, comme on le verra ci-après dans le cadre d'un exemple de communication inter-processeurs par des canaux de registres.

Les commandes NOTIFY et WAIT sont contextuelles et dépendent de la nature (source ou cible) du processeur dans lequel elles sont exécutées.

Dans un processeur cible, une commande NOTIFY peut indiquer au processeur source, par la liaison point-à-point correspondante, que le canal de registre est libre, c'est-à-dire que le registre local attribué au canal est disponible.

Dans un processeur source, une commande NOTIFY peut indiquer au processeur cible que le processeur source a écrit une donnée dans le canal.

Dans le processeur source, une commande WAIT peut être exécutée pour attendre la notification de canal libre du processeur cible. Dans le processeur cible, la commande WAIT peut être exécutée pour attendre la notification d'écriture du processeur source. Une commande WAIT est bloquante en ce qu'elle arrête le processeur tant que la notification attendue n'est pas reçue. Cette combinaison d'instructions permet de dissocier les arrêts du processeur des opérations qui manipulent les données du registre attribué au canal.

Les figures suivantes illustrent plusieurs possibilités d'utilisation de telles commandes, dans le cadre d'un exemple d'une boucle simple que l'on souhaite paralléliser entre trois processeurs. Chaque itération de la boucle consiste à incrémenter un premier indice par 1, incrémenter un deuxième indice par 2, et accumuler la somme des deux indices. Cette boucle est répartie sur trois processeurs PE1, PE2 et PE3. Le processeur PE1 calcule la valeur courante du premier indice et la stocke dans un registre local, désigné r10 à titre d'exemple. Le processeur PE3 calcule la valeur courante du deuxième indice et la stocke dans un registre local, désigné r12. Le processeur PE2 reçoit les valeurs courantes des deux indices dans des registres respectifs, désignés r50 et r52, et accumule leurs contenus dans des registres locaux respectifs, désignés r30 et r32.

Les processeurs source PE1 et PE3 exécutent en boucle une itération consistant à :
- incrémenter le registre d'indice (ADD),
- attendre que le canal vers le processeur PE2 soit disponible (WATT),
- écrire le contenu du registre d'indice dans le canal (LD), et
- notifier l'écriture au processeur cible (NOTIFY).

Le processeur cible PE2 exécute en boucle une itération consistant à :
- notifier que le canal est libre à chacun des processeurs (NOTIFY),
- attendre la mise à jour des registres locaux r50 et r52 par chacun des processeurs PE1 et PE3 (WATT), et
- ajouter les contenus des registres r50 et r52 dans les registres r30 et r32 (ADD).

Deux séries de commandes WATT et NOTIFY sont exécutées dans le processeur cible PE2, associées respectivement aux deux processeurs source PE1 et PE3. Aucun ordre particulier ne s'impose a priori entre les commandes associées aux deux processeurs source.

La figure 2 illustre une première possibilité de séquencement des instructions dans le processeur cible PE2, et un séquencement correspondant des instructions dans les processeurs source PE1 et PE3. Dans ce séquencement, les instructions sont ordonnées dans le processeur cible pour traiter un processeur source après l'autre.

En début de boucle, à un cycle t01, les processeurs PE1 et PE3 exécutent une instruction ADD pour incrémenter leurs indices (stockés respectivement dans les registres r10 et r12). Le processeur PE2 exécute une instruction NOTIFY pour signaler au processeur PE1 que le canal « PE2:r50 » (registre r50 du processeur PE2) est libre.

Au cycle suivant t02, les trois processeurs exécutent une instruction WAIT, les processeurs source pour attendre une notification de canal libre (PE2:r50, PE2:r52), et le processeur cible pour attendre une notification d'écriture distante du processeur PE1.

Au cycle t03, le processeur PE1 sort de l'état d'attente, puisque la notification attendue a été reçue au cycle t01. La processeur PE1 exécute une instruction d'écriture distante LD pour transférer le contenu du registre local r10 au registre r50 du processeur cible. Les processeurs PE2 et PE3 restent en attente d'une notification, ce qui est illustré par un rectangle blanc à la place d'une instruction.

Au cycle t04, le processeur PE1 exécute une instruction de notification pour signaler au processeur PE2 que la donnée attendue a été transférée. En réponse, le processeur PE2 sortira de son état d'attente au cycle suivant. Le processeur PE3 est toujours en attente.

Au cycle t05, le processeur PE1 commence une nouvelle itération - il incrémente son indice r10 par l'exécution d'une instruction ADD. Le processeur PE2 sort de son état d'attente et exécute une instruction ADD pour accumuler le contenu du registre r50 dans le registre r30. Le processeur PE3 attend toujours.

Au cycle t06, le processeur PE1 exécute une instruction WATT pour attendre une nouvelle notification de canal libre. Le processeur PE2 démarre la communication avec le processeur PE3 et exécute une instruction NOTIFY pour signaler au processeur PE3 que son canal est libre. En réponse, le processeur PE3 sortira de son état d'attente au cycle suivant.

Au cycle t07, le processeur PE1 reste en état d'attente. Le processeur PE2 exécute une instruction WAIT pour attendre l'écriture distante d'une nouvelle donnée par le processeur PE3 dans le registre r52. Le processeur PE3 sort de son état d'attente et transfère le contenu du registre r12 dans le registre r52 du processeur PE2.

Au cycle t08, les processeurs PE1 et PE2 restent en état d'attente. Le processeur PE3 exécute l'instruction NOTIFY attendue par le processeur PE2 - le processeur PE2 sortira de son état d'attente au cycle suivant.

Au cycle t09, le processeur PE1 reste en état d'attente. Le processeur PE2 accumule le contenu du registre r52 dans le registre r32 par l'exécution d'une instruction ADD. Le processeur PE3 commence une nouvelle itération par l'incrémentation de l'indice r12.

Une itération ayant ainsi été décrite dans chacun des processeurs, le lecteur comprendra aisément le restant de la séquence représentée au saura construire sa suite.

On constate que la séquence comprend de nombreux cycles d'arrêt des processeurs, jusqu'à quatre cycles par itération dans les processeurs source PE1 et PE3. Ces cycles d'arrêt peuvent en partie être dus au fait que, dans cet exemple, le processeur cible doit exécuter six instructions par itération (trois instructions pour chaque processeur source), alors que chacun des processeurs source ne doit exécuter que quatre instructions par itération. En théorie, on devrait pouvoir tendre vers un minimum de deux cycles d'arrêt par itération sur les processeurs source.

Les instructions WAIT et NOTIFY, comme le représente la figure 2, peuvent être exécutées avec des paramètres. Ces paramètres peuvent identifier le processeur source ou cible, le registre du processeur cible, et la nature de l'événement. En pratique, il n'est pas utile que ces instructions véhiculent autant d'informations. Il suffit que le groupe de processeurs partage un jeu de numéros de canal, et que chaque couple (processeur cible, numéro de registre) soit affecté d'un numéro de canal unique arbitrairement choisi par le programmeur dans le jeu de numéros. Ainsi, les instructions WAIT et NOTIFY sont paramétrées ci-après par le seul numéro de canal, le canal entre les processeurs PE1 et PE2 étant désigné par ch1, et le canal entre les processeurs PE3 et PE2 étant désigné par ch2.

La figure 3 illustre une autre possibilité de séquencement des instructions dans le processeur cible PE2, et un séquencement correspondant des instructions dans les processeurs source PE1 et PE3. Dans ce séquencement, les instructions sont ordonnées dans le processeur cible pour traiter en alternance les instructions relatives aux deux processeurs source. Il en résulte que les instructions de même nature se trouvent groupées. Comme le montre la figure 3, on exécute dans le processeur PE2 pour une itération, d'abord les deux instructions NOTIFY, puis les deux instructions WAIT, et finalement les deux instructions d'accumulation.

Ce choix résulte en une diminution notable des cycles d'arrêt des processeurs source. En poursuivant la séquence de la figure 3, après une phase transitoire d'alignement des instructions aux premières itérations de la boucle, on atteint un régime stable avec deux cycles d'arrêt par itération dans les processeurs PE1 et PE3.

Les deux séquencements des figures 2 et 3 illustrent qu'en ordonnant différemment les instructions WATT et NOTIFY, notamment dans le processeur cible, on obtient des séquencements plus ou moins efficaces en termes de cycles d'attente. Il s'avère que, dans l'exemple considéré, un bon choix consistait à grouper les instructions de même nature. Ce choix pourrait s'avérer moins efficace dans d'autres situations. Par ailleurs, les exemples décrits ne tiennent pas compte des profondeurs de pipeline des unités de traitement associées aux différents types instructions. On a supposé que chaque instruction était exécutée en un cycle pour des raisons de simplification, mais en réalité certaines instructions s'exécutent en plus de cycles que d'autres, ce qui augmente le nombre de schémas de synchronisation possibles. On retiendra que l'utilisation d'instructions WAIT et NOTIFY de la manière décrite ici pour assurer une synchronisation inter-processeurs offre une souplesse d'utilisation au programmeur, lui permettant de rechercher le code le plus efficace en toute situation.

Une synchronisation utilisant deux instructions séparées WAIT et NOTIFY pour chaque écriture par un canal de registre pourrait demander plus de cycles d'horloge par rapport à une solution à drapeau de synchronisation du type décrit dans l'article susmentionné de Rajiv Gupta. On propose ci-après des approches permettant de réduire le nombre de cycles d'horloge.

Un processeur d'architecture VLIW (de l'anglais « Very Large Instruction Word ») comprend plusieurs unités de traitement d'instructions pouvant fonctionner en parallèle, par exemple deux unités arithmétiques et logiques (ALU), une unité de calcul à virgule flottante (FPU), une unité de lecture/écriture de données, et une unité de branchement. Un tel processeur peut exécuter en parallèle, par exemple, deux additions, une multiplication, le déplacement d'une donnée entre des registres, et un branchement conditionnel. Le compilateur pour un tel processeur se charge de placer des instructions qui peuvent être exécutées en parallèle dans des « paquets VLIW ».

Pour gagner des cycles d'horloge, on pourrait envisager de placer des instructions WAIT, NOTIFY, et une instruction d'écriture distante dans un même paquet VLIW (par exemple les instructions des cycles t02 à t04 du processeur PE1). L'instruction WAIT pourrait être traitée par une unité de branchement modifiée et l'instruction NOTIFY par une unité de lecture/écriture modifiée. Si le processeur n'a pas de deuxième unité de lecture/écriture, l'instruction d'écriture distante ne pourrait pas être traitée dans le même paquet ou cycle. Cependant, les unités ALU ont également une fonctionnalité d'écriture ou lecture, puisqu'elles sont conçues pour écrire le résultat d'une opération dans un registre ou à une adresse - une opération d'écriture distante du type LD PE2:r50, r10 (transférer le contenu du registre r10 dans le registre r50 du processeur PE2) peut être récrite sous la forme ADD PE2:r50, r10, 0 (placer la somme du contenu du registre r10 et 0 dans le registre r50 du processeur PE2) en modifiant l'unité ALU de manière à pouvoir communiquer par les liaisons point-à-point.

Ces mesures pourraient ne pas suffire, notamment dans la situation de la figure 3 où on souhaite regrouper des instructions de même nature. En particulier, on ne sait pas regrouper deux instructions WAIT dans un même paquet VLIW sans prévoir deux unités de branchement pour les traiter en parallèle. De façon générale, un même processeur peut être amené à traiter plus de deux canaux de registres en même temps, de sorte qu'il n'est pas raisonnable en termes de surface et de consommation de prévoir des unités de traitement dédiées pouvant satisfaire tous les cas.

Au lieu de prévoir des instructions WAIT et NOTIFY séparées, on propose, dans le cadre de processeurs d'architecture VLIW, de combiner des commandes WATT et NOTIFY dans une seule instruction dite de « synchronisation de groupe » désignée par SYNCGRP. Les commandes WATT et NOTIFY à combiner sont choisies telles que la commande WAIT est celle exécutée avant la commande NOTIFY dans le système séquentiel (figures 2 et 3), par exemple les commandes WAIT et NOTIFY des cycles t02 et t04 du processeur PE1.

En outre, on prévoit d'exécuter dans le même paquet VLIW que l'instruction SYNCGRP l'opération qui provoque la notification, comme l'écriture LD dans le canal de registre ch1 au cycle t03 par le processeur PE1.

Il peut sembler étonnant de vouloir exécuter en parallèle une commande WAIT et une commande NOTIFY ultérieure dans le temps, puisque la commande NOTIFY ne peut être émise qu'à la fin de l'attente, au plus tôt en même temps que l'événement à son origine (LD). En fait, la commande WAIT peut être traitée par l'unité de branchement qui, du fait de sa faible profondeur de pipeline, a un temps de réaction immédiat par rapport aux autres unités de traitement impliquées. Il en résulte que, si la condition permettant de sortir de l'attente n'est pas satisfaite, l'unité de branchement arrête le processeur avant que les autres commandes (NOTIFY) et instructions (LD) du paquet VLIW n'aient pu se terminer. Lorsque la notification attendue est reçue, l'unité de branchement sort le processeur de son état d'attente, d'où il résulte que les autres commandes et instructions du paquet VLIW terminent leur exécution.

La commande NOTIFY peut être traitée par l'unité de lecture/écriture en parallèle avec l'unité de branchement qui traite la commande WAIT.

Une structure particulièrement simple décrite plus tard permet de paramétrer l'instruction SYNCGRP pour traiter en parallèle plusieurs commandes WAIT et plusieurs commandes NOTIFY sans nécessiter plusieurs unités de branchement et de lecture/écriture. L'instruction SYNCGRP peut en outre être paramétrée pour ne pas traiter de commande WAIT, ou ne pas traiter de commande NOTIFY. Le traitement de plusieurs commandes WAIT en parallèle à l'exécution d'une instruction SYNCGRP se traduit par une attente jusqu'à la réception de la dernière des notifications associées aux commandes WAIT.

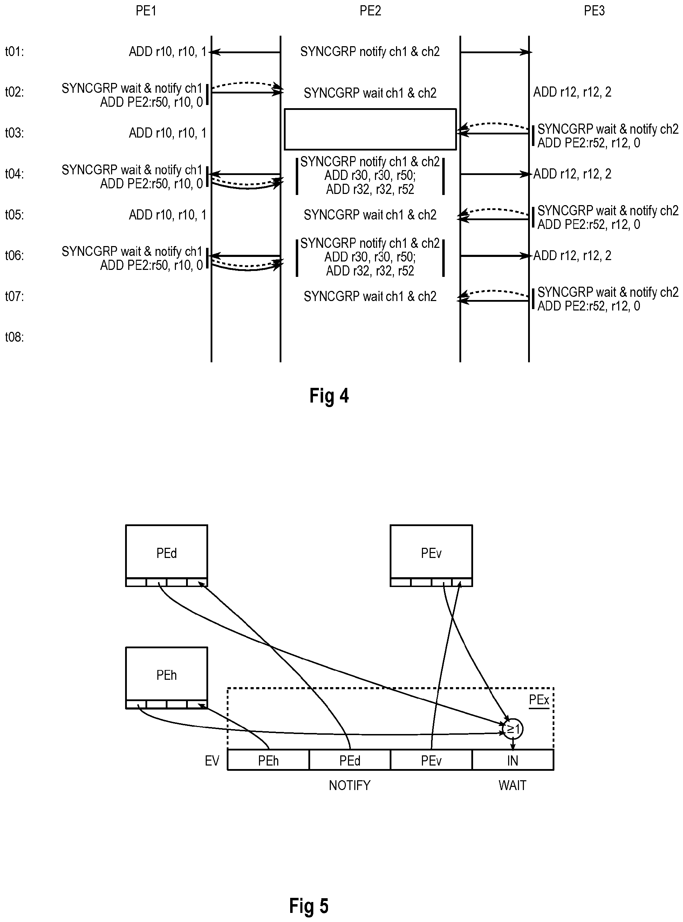

La figure 4 représente un exemple de séquencement basé sur celui de la figure 3, utilisant des instructions SYNCGRP et des paquets VLIW. Du côté des processeurs source PE1 et PE3, on exécute une instruction SYNCGRP pour chaque couple de commandes WAIT et NOTIFY consécutives, et on place dans le même paquet VLIW l'instruction d'écriture distante vers le processeur PE2. Puisque la commande NOTIFY de l'instruction SYNCGRP peut être mise en oeuvre par l'unité de lecture/écriture, celle-ci n'est pas disponible pour l'instruction d'écriture distante dans le même cycle. L'instruction d'écriture distante peut être formatée pour utiliser une unité ALU disponible, par exemple sous la forme d'une addition dont le résultat est écrit dans le registre désigné du processeur cible (ADD PE2:r50, r10, 0). Les instructions d'incrémentation d'indice sont ici exécutées de manière isolée, bien qu'elles auraient pu être intégrées dans les paquets VLIW avec les instructions SYNCGRP.

Du côté du processeur cible, les deux commandes NOTIFY de chaque itération sont groupées dans une première instruction SYNCGRP, et les deux commandes WAIT de chaque itération sont groupées dans une deuxième instruction SYNCGRP. Les instructions d'addition utilisant les registres désignés (r50, r52) sont intégrées dans les mêmes paquets VLIW que les instructions « SYNCGRP notify », sauf celui de la première itération.

Avec cette configuration, on parvient à avoir le même nombre de cycles (2) par itération sur chaque processeur et une exécution théorique sans cycles d'attente.

Pour faire apparaître deux séquencements différents dans les processeurs PE1 et PE3, la boucle du processeur PE3 démarre avec un cycle de retard, à titre d'exemple, ce qui reflète une situation plus proche de la réalité, où il est peu probable que les boucles démarrent en même temps dans les trois processeurs. Cela provoque un cycle d'arrêt du processeur PE2 au cycle t03. Par contre, aucun autre cycle d'arrêt n'apparaît dans les séquencements des trois processeurs.

Pour comprendre le déroulement des échanges entre processeurs, on décrit le cycle t04. Dans ce cycle, le processeur cible PE2 exécute un paquet VLIW qui, dans le même cycle, accumule les contenus des registres r50 et r52 dans les registres r30 et r32, et notifie aux processeurs PE1 et PE3 que les registres r50 et r52 (canaux ch1 et ch2) sont libres. (Les registres r50 et r52 ont été mis à jour aux cycles t02 et t03, respectivement.) Du côté du processeur PE3, la notification n'est pas encore attendue, et ne déclenche rien dans le cycle t04.

Du côté du processeur PE1, la notification arrive alors que le processeur exécute un paquet VLIW qui, dans le même cycle, attend la notification, émet une notification, et écrit le contenu du registre r10 dans le registre r50 du processeur PE2. L'attente est immédiatement levée par l'arrivée de la notification, d'où il résulte que le processeur PE1 transfère le contenu du registre r10 (flèche en pointillés) et émet une notification (flèche en trait plein).

La mise à jour du registre r50 du processeur PE2 a ainsi lieu en même temps que son contenu est lu pour être accumulé dans le registre r30. Il n'y a cependant pas de conflit, car l'opération d'accumulation (ADD) utilise l'état qu'avait le registre r50 au début du cycle, alors que la mise à jour du registre r50 a lieu après le début du cycle.

Comme l'illustre ce séquencement, l'instruction SYNCGRP peut être paramétrée pour traiter simultanément plusieurs commandes WAIT (en pratique une par canal traité par le processeur), et plusieurs commandes NOTIFY (également une par canal traité par le processeur). Pour cela, le paramètre passé à l'instruction SYNCGRP peut être un mot comprenant un champ de notification respectif pour chacun des autres processeurs du groupe, et un champ d'identification des notifications attendues de n'importe quel processeur du groupe. Chacun des champs sert à inscrire les numéros de canal de registre pour lesquels le processeur envoie ou attend les notifications.

Pour un groupe de quatre processeurs, le mot passé en paramètre peut avoir une taille de 32 bits dans lequel trois octets de poids fort servent à identifier les notifications émises respectivement vers les trois autres processeurs et l'octet de poids faible sert à identifier les notifications attendues. Dans chaque octet on peut définir un canal de registre par la position d'un bit respectif à 1, c'est-à-dire utiliser un masque de bits. Chaque champ peut ainsi coder huit canaux de façon unique pour les quatre processeurs, la valeur zéro indiquant qu'aucune notification n'est émise ou attendue. Par exemple, le paramètre hexadécimal 0x00010002 signifie que le processeur local envoie une notification concernant le canal 0 (0x01 = 2°) au processeur de rang 2 et attend une notification concernant le canal 1 (0x02 = 2¹). Le paramètre 0x06000800 signifie que le processeur local envoie simultanément des notifications concernant les canaux 1 et 2 (0x06 = 2¹ + 2²) au processeur de rang 3 et une notification concernant le canal 3 (0x08 = 2³) au processeur de rang 1, et n'attend aucune notification. Le paramètre 0x0000000B signifie que le processeur local n'envoie aucune notification et attend des notifications concernant les canaux 0, 1 et 3 (0x0B = 2⁰+2¹+2³).

La figure 5 est un schéma bloc illustrant un détail des liaisons point-à-point entre processeurs, permettant d'intégrer les nouvelles instructions SYNCGRP de manière particulièrement simple dans une architecture de processeur existante. Cette figure illustre les liaisons servant à véhiculer les notifications entre processeurs.

Chaque processeur d'un groupe de processeurs reliés par des liaisons point-à-point comprend un registre d'événement EV, représenté en détail pour un processeur PEx. Ce registre correspond au paramètre de l'instruction SYNCGRP - il comprend un champ de notification dédié à chacun des autres processeurs du groupe, accessible en écriture par le processeur local. Dans l'exemple d'un groupe de quatre processeurs, on désigne le processeur adjacent vertical par PEv, le processeur adjacent horizontal par PEh, et le processeur diagonal par PEd. Les champs de notification sont désignés par ces mêmes références. Par ailleurs, le registre EV comprend un champ de notification entrante IN accessible en écriture par tous les autres processeurs du groupe.

Chaque champ de notification est câblé au champ IN du processeur distant correspondant. Toutes les liaisons ne sont pas représentées pour des raisons de clarté. Le câblage des champs IN est illustré plus en détail pour le processeur local PEx. Dans le cas où les canaux de registre sont identifiés par un masque, le champ IN peut en fait être câblé pour recevoir un OU bit à bit des contenus des champs de notification correspondants des autres processeurs. Ainsi, le champ de registre IN peut conserver l'historique des notifications reçues par le processeur local. Une fois que cet historique a été pris en compte par une commande WAIT, le champ IN peut être effacé, du moins les bits pris en compte par la commande WAIT, identifiés dans le paramètre de l'instruction SYNCGRP.

Les champs de notification du registre EV peuvent être à écriture seule et n'être que des fils qui transmettent directement les états présents dans le paramètre de l'instruction SYNCGRP.

Avec cette configuration, l'exécution d'une instruction SYNCGRP avec un paramètre donné peut se résumer par les étapes suivantes :
- Comparer le contenu du champ IN du registre EV local au champ de notifications attendues du paramètre.
- Arrêter le processeur tant que les bits à 1 du champ de notifications attendues ne sont pas tous contenus dans le champ IN.
- Sortir de l'état d'arrêt lorsque les bits à 1 du champ de notifications attendues sont tous contenus dans le champ IN.
- Ecrire les contenus des trois champs de notification dans les champs PEh, PEd et PEv du registre EV. Cela revient à écrire ces contenus directement dans les champs IN correspondants des registres EV des autres processeurs.
- Mettre à zéro dans le champ IN les bits qui étaient à 1 dans le champ de notifications attendues.

Ces étapes peuvent être mises en oeuvre, au coût de modifications mineures, par des unités de traitement d'instructions déjà présentes dans un processeur VLIW, notamment l'unité de branchement pour gérer la comparaison et l'arrêt du processeur, et l'unité de lecture/écriture pour gérer le registre EV.

De nombreuses variantes et modifications des modes de réalisation décrits ici apparaîtront à l'homme du métier. Bien que des techniques de synchronisation aient été décrites dans le cadre d'un partage de ressources entre processeurs, notamment des canaux de registres, les techniques de synchronisation peuvent être appliquées dans toute situation où les fils exécutés en parallèle par plusieurs processeurs doivent être « réalignés » après une série d'événements. Par exemple, on peut souhaiter que les fils exécutés en parallèle soient synchronisés au début de chaque nouvelle itération d'une boucle, dans le cas, par exemple, où les boucles peuvent avoir des temps d'exécution variables.

## Revendications

1. Procédé de synchronisation inter-processeurs par des liaisons point-à-point, comprenant les étapes suivantes :
• définir un canal de synchronisation point-à-point entre un processeur source (PE1) et un processeur cible (PE2) ;
• prévoir une commande d'attente, WAIT, d'une notification, la commande d'attente étant conçue pour, lorsqu'elle est exécutée par un premier des processeurs source et cible, provoquer l'arrêt du premier processeur jusqu'à la réception de la notification par le canal de synchronisation ;
• prévoir une commande de notification, NOTIFY, conçue pour, lorsqu'elle est exécutée par le second des processeurs source et cible, émettre par le canal de synchronisation une notification au premier processeur (PE1) ;
• prévoir une instruction de synchronisation dédiée, SYNCGRP, dans le jeu d'instructions des processeurs, conçue pour exécuter en parallèle une commande d'attente et une commande de notification identifiables par un paramètre de l'instruction de synchronisation ;
• dans le processeur source, paramétrer la commande d'attente et la commande de notification dans une première instruction de synchronisation ; et
• exécuter dans le processeur source la première instruction de synchronisation, d'où il résulte que :
- la commande d'attente prédomine et suspend l'exécution de la commande de notification jusqu'à la réception de la notification du processeur cible,
- la commande de notification est exécutée à la réception de la notification du processeur cible,
- si la notification du processeur cible est reçue au plus tard à l'exécution de la première instruction de synchronisation, les commandes d'attente et de notification sont exécutées en parallèle.

2. Procédé selon la revendication 1, dans lequel le canal de synchronisation est un canal de registre.

3. Procédé selon la revendication 1, dans lequel les processeurs sont d'architecture VLIW permettant l'exécution en parallèle de plusieurs instructions contenues dans un même paquet VLIW, le procédé comprenant les étapes suivantes :
• dans le processeur cible (PE2), au plus tard en même temps que l'exécution de la commande de notification, exécuter une instruction, ADD, libérant une ressource partagée (r50) ; et
• exécuter dans le processeur source, dans le même paquet VLIW, la première instruction de synchronisation et une instruction d'écriture, LD, dans la ressource partagée, d'où il résulte que la commande de notification et l'instruction d'écriture sont exécutées en parallèle à la réception de la notification du processeur cible.

4. Procédé selon la revendication 3 comprenant les étapes suivantes mises en oeuvre dans le processeur cible :
• paramétrer la commande d'attente dans une deuxième instruction de synchronisation ;
• paramétrer la commande de notification dans une troisième instruction de synchronisation ; et
• exécuter la troisième instruction de synchronisation et l'instruction libérant la ressource partagée dans le même paquet VLIW.

5. Procédé selon la revendication 1, comprenant l'étape suivante :
• concevoir l'instruction de synchronisation dédiée pour pouvoir exécuter en parallèle un nombre choisi de commandes d'attente et un nombre choisi de commandes de notification, identifiables par le paramètre de l'instruction.

6. Procédé selon la revendication 1, comprenant les étapes suivantes :
• identifier le canal de synchronisation par un identifiant unique, ch 1 ; et
• utiliser l'identifiant unique comme paramètre des commandes d'attente et de notification relatives au canal de synchronisation.

7. Procédé selon la revendication 6 comprenant les étapes suivantes :
• à l'exécution d'une commande de notification dans un processeur local à destination d'un processeur distant, présenter l'identifiant unique sur la liaison point-à-point entre les processeurs local et distant ;
• dans le processeur distant, écrire l'identifiant unique dans un registre d'événement (EV) ; et
• à l'exécution de la commande d'attente dans le processeur distant :
- comparer le contenu du registre d'événement au paramètre de la commande d'attente ; et
- en cas d'égalité, terminer l'attente et réinitialiser le contenu du registre d'événement.

8. Procédé selon la revendication 6 comprenant les étapes suivantes :
• identifier chaque canal de synchronisation distinct en activant un bit de poids respectif d'un identifiant de format commun aux registres d'événement de tous les processeurs ;
• écrire dans le registre d'événement du processeur distant tous les bits actifs des identifiants présentés sur toutes les liaisons point-à-point arrivant au processeur distant ; et
à l'exécution de la commande d'attente dans le processeur distant, terminer l'attente si tous les bits actifs du paramètre de la commande d'attente sont actifs dans le registre d'événement, d'où il résulte qu'une commande d'attente peut être paramétrée pour attendre des notifications de plusieurs processeurs à la fois.

## Patentansprüche

1. Verfahren zum Synchronisieren zwischen Prozessoren über Punkt-zu-Punkt-Verbindungen, umfassend die Schritte:
• Definieren eines Punkt-zu-Punkt-Synchronisationskanals zwischen einem Quellprozessor (PE1) und einem Zielprozessor (PE2);
• Bereitstellen eines Wartebefehls, WAIT, einer Benachrichtigung, wobei der Wartebefehl so konzipiert ist, dass er, wenn er durch einen ersten des Quell- und des Zielprozessors ausgeführt wird, das Stoppen des ersten Prozessors bewirkt, bis die Benachrichtigung durch den Synchronisationskanal empfangen wird;
• Bereitstellen eines Benachrichtigungsbefehls, NOTIFY, der so konzipiert ist, dass er, wenn er durch den zweiten des Quell- und des Zielprozessors ausgeführt wird, durch den Synchronisationskanal eine Benachrichtigung an den ersten Prozessor (PE1) sendet;
• Bereitstellen einer dedizierten Synchronisationsanweisung, SYNCGRP, in dem Satz von Anweisungen der Prozessoren, die so konzipiert ist, parallel einen Wartebefehl und einen Benachrichtigungsbefehl auszuführen, die durch einen Parameter der Synchronisationsanweisung identifizierbar sind;
• in dem Quellprozessor, Parametrisieren des Wartebefehls und des Benachrichtigungsbefehls in einer ersten Synchronisationsanweisung; und
• Ausführen in dem Quellprozessor der ersten Synchronisationsanweisung, woraus sich ergibt, dass:
- der Wartebefehl dominiert und die Ausführung des Benachrichtigungsbefehls bis zu dem Empfang der Benachrichtigung von dem Zielprozessor aussetzt,
- der Benachrichtigungsbefehl bei dem Empfang der Benachrichtigung von dem Zielprozessor ausgeführt wird,
- wenn die Benachrichtigung des Zielprozessors spätestens bei der Ausführung der ersten Synchronisationsanweisung empfangen wird, der Warte- und der Benachrichtigungsbefehl parallel ausgeführt werden.

2. Verfahren nach Anspruch 1, wobei der Synchronisationskanal ein Registerkanal ist.

3. Verfahren nach Anspruch 1, wobei die Prozessoren mit VLIW-Architektur sind, die die parallele Ausführung mehrerer Anweisungen ermöglicht, die in demselben VLIW-Paket enthalten sind, das Verfahren umfassend die folgenden Schritte:
• in dem Zielprozessor (PE2) spätestens gleichzeitig mit der Ausführung des Benachrichtigungsbefehls, Ausführen einer Anweisung, ADD, die eine gemeinsam genutzte Ressource (r50) freigibt; und
• Ausführen in dem Quellprozessor in dem gleichen VLIW-Paket der ersten Synchronisationsanweisung und einer Schreibanweisung, LD, in der gemeinsam genutzten Ressource, woraus sich ergibt, dass der Benachrichtigungsbefehl und die Schreibanweisung parallel zu dem Empfang der Benachrichtigung von dem Zielprozessor ausgeführt werden.

4. Verfahren nach Anspruch 3, umfassend die folgenden Schritte, die in dem Zielprozessor implementiert werden:
• Parametrisieren des Wartebefehls in eine zweite Synchronisationsanweisung;
• Parametrisieren des Benachrichtigungsbefehls in eine dritte Synchronisationsanweisung; und
• Ausführen der dritten Synchronisierungsanweisung und der Anweisung, die die gemeinsam genutzte Ressource in dem gleichen VLIW-Paket freigibt.

5. Verfahren nach Anspruch 1, umfassend den folgenden Schritt:
• Konzipieren der dedizierten Synchronisationsanweisung, um eine ausgewählte Anzahl von Wartebefehlen und eine ausgewählte Anzahl von Benachrichtigungsbefehlen parallel ausführen zu können, die durch den Parameter der Anweisung identifizierbar sind.

6. Verfahren nach Anspruch 1, umfassend die folgenden Schritte:
• Identifizieren des Synchronisationskanals durch eine eindeutige Kennung, ch 1; und
• Verwenden der eindeutigem Kennung als Parameter des Warte- und des Benachrichtigungsbefehls bezüglich des Synchronisationskanals.

7. Verfahren nach Anspruch 6, umfassend die folgenden Schritte:
• bei der Ausführung eines Benachrichtigungsbefehls in einem lokalen Prozessor für einen entfernten Prozessor, Präsentieren der eindeutigen Kennung auf der Punkt-zu-Punkt-Verbindung zwischen dem lokalen und dem entfernten Prozessor;
• in dem entfernten Prozessor, Schreiben der eindeutigen Kennung in ein Ereignisregister (EV); und
• bei der Ausführung des Wartebefehls in dem entfernten Prozessor:
- Vergleichen des Inhalts des Ereignisregisters mit dem Parameter des Wartebefehls; und
- bei Gleichheit: Beenden des Wartens und Zurücksetzen des Inhalts des Ereignisregisters.

8. Verfahren nach Anspruch 6, umfassend die folgenden Schritte:
• Identifizieren jedes separaten Synchronisationskanals, indem ein jeweiliges bedeutendes Bit einer Kennung mit einem Format aktiviert wird, das den Ereignisregistern aller Prozessoren gemeinsam ist;
• Schreiben aller aktiven Bits der Kennungen, die auf allen Punkt-zu-Punkt-Verbindungen präsentiert werden, die an dem entfernten Prozessor ankommen, in das Ereignisregister des entfernten Prozessors; und
bei der Ausführung des Wartebefehls in dem entfernten Prozessor, Beenden des Wartens, wenn alle aktiven Bits des Parameters des Wartebefehls in dem Ereignisregister aktiv sind, woraus sich ergibt, dass ein Wartebefehl zum Warten auf Benachrichtigungen von mehreren Prozessoren zugleich parametrisiert werden kann.

## Claims

1. An inter-processor synchronization method using point-to-point links, comprising the steps of:
• defining a point-to-point synchronization channel between a source processor (PE1) and a target processor (PE2);
• providing a wait command, WAIT, expecting a notification, wherein the wait command is designed, when it is executed by a first of the source and target processors, to stop the first processor until the notification is received through the synchronization channel;
• providing a notification command, NOTIFY, designed, when it is executed by a second of the source and target processors, to transmit through the synchronization channel a notification to the first processor (PE2);
• providing a dedicated synchronization instruction, SYNCGRP, in the instruction set of the processors, designed to execute in parallel a wait command and a notification command identified by a parameter of the synchronization instruction;
• in the source processor, configuring the wait command and the notification command in a first synchronization instruction; and
• executing in the source processor the first synchronization instruction, whereby:
- the wait command prevails and suspends the execution of the notification command until the notification is received from the target processor,
- the notification command is executed upon receipt of the notification from the target processor,
- if the notification from the target processor is received on or before the execution of the first synchronization instruction, the wait and notification commands are executed in parallel.

2. The method of claim 1, wherein the synchronization channel is a register file.

3. The method of claim 1, wherein the processors have a VLIW architecture enabling parallel execution of multiple instructions conveyed in a same VLIW packet, the method comprising the steps of:
• in the target processor (PE2), at the latest together with the execution of the notification command, executing an instruction, ADD, that releases a shared resource (r50); and
• executing in the source processor, in the same VLIW packet, the first synchronization instruction and an instruction, LD, for writing in the shared resource, whereby the notification command and the write instruction are executed in parallel upon receipt of the notification from the target processor.

4. The method of claim 3, comprising the following steps carried out in the target processor:
• configuring the wait command in a second synchronization instruction;
• configuring the notification command in a third synchronization instruction; and
• executing the third synchronization instruction and the instruction releasing the shared resource in the same VLIW packet.

5. The method according to claim 4, comprising the step of:
• designing the dedicated synchronization instruction to execute in parallel a selected number of wait commands and a selected number of notification commands, identifiable by the parameter of the instruction.

6. The method of claim 1, comprising the steps of:
• identifying the synchronization channel by a unique identifier, ch 1; and
• using the unique identifier as a parameter of the wait and notification commands related to the synchronization channel.

7. The method of claim 6, comprising the steps of:
• at the execution of a notification command in a local processor for a remote processor, presenting the unique identifier on the point-to-point link between the local and remote processors;
• in the remote processor, writing the unique identifier in an event register (EV); and
• at the execution of the wait command in the remote processor:
- comparing the content of the event register to the parameter of the wait command; and
- if the comparison is satisfied, resuming execution and resetting the content of the event register.

8. The method of claim 6, comprising the steps of:
• identifying each distinct synchronization channel by setting a respective bit of an identifier having a format common with the event registers of all processors;
• writing in the event register of the remote processor all the bits that are set in the identifiers presented on all the point-to-point links arriving to the remote processor; and
• at the execution of the wait command in the remote processor, resuming execution if all the bits that are set in the parameter of the wait command are set in the event register, whereby a wait command can be configured to wait for notifications of multiple processors at once.
